# EUROPEAN PATENT APPLICATION

(11) **EP 0 918 072 A1**
(43) Date of publication of application: **26.05.1999**
(21) Application number: 98203860.6
(22) Date of filing: 17.11.1998
(51) Int. Cl.: C08L 67/06, F21V 7/22, C08G 63/91, C08L 67/07

(54) **Resin composition based on unsaturated polyester**

(30) Priority: 19.11.1997 NL 1007573
(71) Applicant: DSM N.V., 6411 TE Heerlen (NL)
(72) Inventor: Jongsma, Jacob Anthon, 8016 HN Zwolle (NL); De Koning, Adrianus Johannes, 8014 KA Zwolle (NL); Van Voorst, Bastiaan, 8071 HK Nunspeet (NL)

(57) **Abstract**

The invention relates to a resin composition comprising (A) an unsaturated polyester, (B) a monomer that is copolymerizable with the unsaturated polyester (A), (C) optionally an anti-shrink compound, (D) reinforcing fibres and (E) fillers, and is characterized in that the unsaturated polyester (A) has an acid number, measured according to ISO 3682, of less than 13 mg of KOH/g.

## Description

The invention relates to a resin composition comprising (A) an unsaturated polyester; (B) a monomer that is copolymerizable with the unsaturated polyester (A); (C) optionally an anti-shrink agent; (D) reinforcing fibres; and (E) fillers.

Such a resin composition - usually referred to by for example BMC ('Bulk Moulding Compound'), SMC ('Sheet Moulding Compound'), TMC ('Thick Moulding Compound') or CMC ('Continuous Moulding Compound') - is known from EP-A-0681000. The known resin composition described herein is used to produce end products having good mechanical properties, a high thermal and chemical resistance, dimensional stability and a smooth surface. It is for example possible to use the known resin composition to produce headlights for vehicles, for example headlights for private cars or lorries.

Such headlights consist of a housing with a transparent front (the glass), within which is a reflector that is designed so that, when the light comes on, a well-aligned beam of light is formed that leaves the headlight through the glass. Headlight housings and headlight reflectors are for example made by injection-moulding BMC.
The reflector's inside wall is coated with a thin reflecting layer - for example a vapour-deposited aluminium layer -, whose surface must be as smooth as possible to ensure good operation. The reflecting layer must also show good adhesion to the reflector's inside wall.

The parts of the headlight - housing and reflector- must also have a high thermal stability.

The known resin composition described in EP-A-0681000 presents the drawback that so-called fogging occurs after some time of use. Fogging is in the context of this application understood to be the deposition on the glass of the headlight of organic compounds from the resin composition. Fogging is of course highly undesirable because it reduces the transparency of the glass of the headlight. The organic compounds released from the known resin composition can in principle be of any kind. Examples are decomposition products formed under the influence of high temperatures and/or other ambient factors (such as moisture), processing aids (for example agents for reducing the viscosity), and/or agents facilitating the removal of the end product from the mould.

The aim of the present invention is to provide a resin composition that does not show fogging, that is easy to remove from the mould and that shows excellent adhesion to reflecting materials such as aluminium.

To this end the resin composition according to the invention is characterized in that the unsaturated polyester (A) has an acid number, measured according to ISO 3682, of less than 13 mg of KOH/g. Preferably this acid number is less than 10 mg of KOH/g, most preferably less than 5 mg of KOH/g.

Unsaturated polyesters having an acid number that is slightly reduced relative to the usual values (20-30 mg of KOH/g) are known per se. The use of unsaturated polyesters with the claimed greatly reduced acid numbers in resin compositions for the purpose described above has however not been described. Reduced acid numbers are usually obtained by modifying the acid end groups of the unsaturated polyester with compounds that can react with these end groups. It is for example possible to obtain a reduced acid number by modifying the end groups of the unsaturated polyester with alcohols.

It is very advantageous to characterize the resin composition according to the invention in that it contains condensed radicals resulting from a reaction of a monofunctional compound (F) containing an epoxide group with the acid end groups of the unsaturated polyester (A).

'Monofunctional' is in the context of this application understood to mean that compound (F) will react predominantly with the acid end groups of the unsaturated polyester (A) via the epoxide group. Compound (F) may contain other reactive groups, but their reactivity with the acid end groups is much lower than that of the epoxide group.

Suitable compounds (F) according to the invention are preferably monofunctional epoxide compounds that are very reactive with the acid end groups of the unsaturated polyester (A). Examples of suitable compounds (F) are 1,2-alkylene oxides, such as 1,2-ethylene oxide, 1,2-propylene oxide and/or 1,2-butylene oxide, halogen-containing 1,2-epoxides, such as epichlorohydrin, epifluorohydrin and epibromohydrin, styrene oxides, whether or not substituted, and glycidyl ethers, such as for example hexyl glycidyl ether, phenyl glycidyl ether and/or allyl glycidyl ether.

Preferably compound (F) is a monofunctional epoxide represented by the formula: 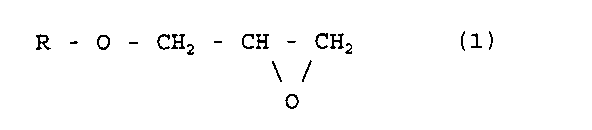 in which R is an organic group.
Suitable R groups are for example C₁ - C₂₀ alkyl (such as ethyl, methyl, butyl, etc.), aryl, allyl, phenyl, alkylphenyl, cresyl and/or C₄ - C₂₀ branched alkyl. Compounds (F) that are also suitable are glycidyl esters of saturated and/or unsaturated carboxylic acids represented by the formula: 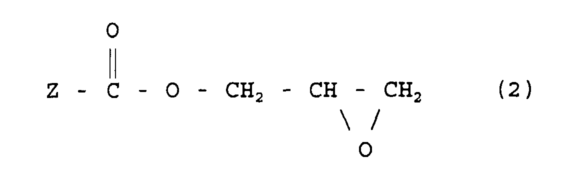 in which Z is an organic group.
Suitable Z groups are for example C₄ - C₂₀ alkyl (such as ethyl, methyl, butyl, etc.), aryl, allyl, phenyl, alkylphenyl, cresyl and/or C₄ - C₂₀ branched alkyl. A suitable glycidyl ester of an unsaturated carboxylic acid is for example glycidyl (meth)acrylate.

Preferably Z is chosen from the group comprising C₄ - C₂₀ branched alkyl. Most preferably it is C₈ - C₁₂ branched alkyl.

Another advantage of the resin composition according to the invention is that the resin composition according to the invention has an excellent temperature resistance. Because of this a headlight reflector made from the resin composition has good dimensional stability, in particular also at the headlight's high operating temperature, which can rise to above 200°C.

The amount of compound (F) in the resin composition according to invention can be chosen within a wide range. A suitable amount is for example between 0.1 and 10 wt.%, relative to the total weight of components (A) and (B) of the resin composition. Preferably the amount of compound (F) is between 1 and 8 wt.%, relative to the total weight of (A) and (B). Most preferably it is between 2 and 5 wt.%, relative to the total weight of (A) and (B).

It is advantageous to add catalysts to the resin composition according to the inventions for the reaction between compound (F) and the unsaturated polyester's acid end groups. Suitable catalysts are for example phosphonium compounds and ammonium compounds.

The unsaturated polyester (A) in the resin composition according to the invention is any polyester obtained through the reaction of organic compounds containing carboxyl and/or alcohol groups. At least one of the starting compounds then contains unsaturated compounds. Unsaturated polyesters are usually composed from one or more aliphatic and/or cycloaliphatic mono-, di- and/or polyvalent alcohols and one or more aliphatic, cycloaliphatic and/or aromatic di- or polyvalent carboxylic acids and, optionally, monocarboxylic acids and/or the esters and anhydrides derived therefrom.

Suitable alcohols preferably contain fewer than 30 carbon atoms. Examples of suitable alcohols are benzyl alcohol, ethylene glycol, diethylene glycol, triethylene glycol, propylene glycol, dipropylene glycol, neopentyl glycol, butanediol, pentanediol, hexanediol, dimethylol cyclohexane, glycerol, trimethylol propane, pentaerythritol, dipentaerythritol, hydrogenated bisphenol-A, 2,2-bis-(2-hydroxyethoxy)phenylpropane and/or 2,2-bis-(2-hydroxypropoxy)phenylpropane.

Compound (F) in the resin composition according to the invention can optionally be added to the resin composition during the preparation of the unsaturated polyester. It is for example possible to add one or more epoxide compounds (F) according to the invention to the reaction mixture in addition to the alcohol compound(s) mentioned above. It may also be decided not to add epoxide compound (F) to the resin composition until it is being prepared, in other words during the mixing of components (A) up to and including (F).

Examples of suitable di- or polyvalent carboxylic acids are fumaric acid, maleic acid, chloromaleic acid, itaconic acid, citraconic acid, malonic acid, succinic acid, glutaric acid, methylglutaric acid, adipic acid, sebacic acid, 1,4-cyclohexanedicarboxylic acid, phthalic acid, isophthalic acid, terephthalic acid, trimellitic acid, dihydrophthalic acid, tetrahydrophthalic acid, hexahydrophthalic acid, tetrachlorophthalic acid, endomethylene tetrahydrophthalic acid (HIMIC), hexachloro endomethylene tetrahydrophthalic acid and/or the corresponding esters or anhydrides.

The unsaturated carboxylic acids to be used are preferably ethylenically unsaturated carboxylic acids, in particular α,β-ethylenically unsaturated carboxylic acids.

According to a preferred embodiment of the invention the unsaturated polyester contains fumaric acid, maleic acid and/or terephthalic acid as carboxylic acid units .

As the alcohol use is preferably made of (di)ethylene glycol, (di)propylene glycol and/or neopentyl glycol.

The unsaturated polyester may be amorphous or crystalline.

Other polyesters that are suitable for the resin composition according to the invention are the vinyl-ester polymers. Vinyl-ester polymers, also known under the name of epoxy (meth)acrylates, are the addition products of polyepoxides and unsaturated carboxylic acids, preferably acrylic acid and methacrylic acid. Suitable polyepoxides are epoxy novolak resins and in particular polyepoxides based on bisphenol A. Another class of suitable vinyl-ester polymers consists of the esterification products of alkoxylated bisphenol A and (meth)acrylic acid.

Other polyesters that are suitable for the resin composition according to the invention are the vinyl ester urethane polymers. Vinyl ester urethane polymers, also known under the name of urethane (meth)acrylates, are the addition products of a polyvalent isocyanate, a polyvalent alcohol and/or amine and a hydroxyalkyl (meth)acrylate.

The monomer (B) that is copolymerizable with the polyester contains one or more vinyl groups and usually fewer than 50 carbon atoms. Suitable monomers are for example of a vinyl aromatic, vinyl ether, vinyl ester, acrylate and/or allyl type. Preferably the monomer is vinyl aromatic.

Vinyl aromatic monomers are for example chosen from the group comprising styrene, α-methylstyrene, o-, m-, p-methylstyrene, p-chlorostyrene, t-butylstyrene, divinyl benzene, bromostyrene, vinyl naphthalene, α-chlorostyrene and divinyl naphthalene. Preferably styrene is used.

Acrylate compounds are for example chosen from the group comprising methyl, ethyl, propyl, isopropyl, butyl, isobutyl, phenyl and benzyl acrylate or methacrylate, 2-ethylhexyl (meth)acrylate, dihydrocyclopentadiene acrylate, cyclohexyl (meth)acrylate, butanediol (meth)acrylate, butanediol di(meth)acrylate, (meth)acrylamide, the reaction products of (meth)acrylic acid and phenyl or cresyl glycidyl ethers, propylene glycol di(meth)acrylate, di-and triethylene glycol di(meth)acrylate, di- and tripropylene glycol di(meth)acrylate, hexanediol di(meth)acrylate and trimethylol propane tri(meth)acrylate. Preferably hydroxyethyl methacrylate and hydroxypropyl methacrylate are used.

Vinyl ether, vinyl ester and allyl compounds are for example chosen from the group comprising allyl phthalate, diallyl phthalate, diallyl isophthalate, triallyl cyanurate, diallyl terephthalate, vinyl acetate, vinyl propionate, vinyl pivalate, vinyl ether, vinyl versatate, vinyl propylol ether, divinyl ether, vinyl butylol ether and vinyl benzyl alcohol ethers.

A suitable amount of components (A) and (B) in the resin composition according to the invention is between 5 and 40 wt.%, relative to the total weight of components (A) up to and including (E). More preferably this is between 10 and 20 wt.%.

Suitable anti-shrink compounds (C) in the resin composition according to the invention are thermoplastic polymers such as for example polyvinyl acetate, ethylene vinyl acetate, polystyrene, polyacrylates, such as for example polymethyl methacrylate, saturated polyesters, polyethylene, polyurethane and rubbers based on butadiene and styrene. Such anti-shrink compounds are usually referred to as 'low profile additives' (LPA). It is also possible to use some of the aforementioned polymers in a carboxylated form, for example as a copolymer with ethylenically unsaturated carboxylic acids or the corresponding anhydride.

A suitable amount of anti-shrink compound (C) in the resin composition according to the invention is between 0 and 20 wt.%, relative to the total weight of components (A) up to and including (E). More preferably this is between 2 and 15 wt.%, most preferably between 5 and 10 wt.%.

The resin composition according to the invention may further contain inorganic and/or organic reinforcing fibres (D) in the form of rovings or chopped fibres. The weight average length of the reinforcing fibres is usually between 0.05 and 40 mm. Preferably the reinforcing fibres have a weight average length of between 2 and 15 mm, most preferably between 4 and 6 mm. Suitable reinforcing fibres are for example glass fibres, carbon fibres, cellulose, sisal and jute fibres and steel fibres. It is also possible to use synthetic organic fibres, such as for example fibres based on drawn polyethylene, polyamide and polycarbonate. Preferably the resin composition contains glass fibres.

A suitable amount of reinforcing fibres (D) in the resin composition according to the invention is between 1 and 40 wt.%, relative to the total weight of components (A) up to and including (E). More preferably this is between 8 and 20 wt.%.

The resin composition according to the invention further contains the fillers commonly used for the resin composition (E). Suitable fillers are for example calcium carbonate, kaolin, heavy spar, dolomite, quartz flour, slate flour, talcum, aluminium trihydrate, sand and optionally pigments and colourants. It is also possible to add further reinforcing materials (E) to the resin composition in addition to the reinforcing fibres (D). Suitable reinforcing materials (E) are for example hollow or solid glass beads and plate-shaped materials such as mica. It is also possible to add thixotropic agents (such as colloidal silica, highly reactive silicic acids, bentones), and hydrogenated oils (such as for example castor oil) to the resin composition.

Preferably the amount of fillers (E) is between 40 and 80 wt.%, relative to the total weight of the resin composition. Most preferably it is between 50 and 70 wt.%.

To facilitate the removal from the mould of a moulded part produced using the resin composition according to the invention, for example a headlight reflector, the resin composition optionally contains a mould release agent. Suitable mould release agents are known to a person skilled in the art and are for example chosen from the group comprising zinc stearate, calcium stearate and/or magnesium stearate and alkylene ether waxes. Such mould release agents are usually added to the known resin composition in amounts of between 0.1 and 2 wt.%. The resin composition according to the invention presents the added advantage that the mould release agent can be omitted without this reducing the ease with which a moulded part can be removed from the mould. Preferably the resin composition according to the invention contains between 0 and 2 wt.% mould release agent, more preferably between 0 and 0.5 wt.%. Most preferably the resin composition according to the invention contains no mould release agent.

The resin composition may optionally also contain a thickener. Such thickeners are known to a person skilled in the art and comprise for example oxides and hydroxides of the metals of groups I, II and III of the Periodic System. Examples of suitable thickeners are the oxide or hydroxide of magnesium, lithium, calcium and/or aluminium. Preferably use is made of magnesium oxide. It is also possible to use agents that accelerate thickening, such as cholinchloride and/or semi-esters of a polyetherpolyol and maleic anhydride. It is also advantageous to add thickening additives to the resin composition. Such thickening additives can be added if a thickened resin composition is desired and component (A) is an unsaturated polyester with a low concentration of carboxyl groups or with a negligible concentration of carboxyl groups, such as vinyl ester or vinyl ester urethane resins. Examples of such thickening additives are vinyl polymers containing carboxyl groups, as for example described in EP-A-501176, or semi-esters of a polyether polyol with a dicarboxylic anhydride. It is also possible to use a polyisocyanate, optionally combined with a metal oxide or metal hydroxide.

Thickeners are usually used in amounts of between 0.1 and 10 wt.%, relative to the amount of component (A) in the resin composition.

Curing of the resin composition is preferably initiated by an initiator. Suitable initiators are free-radical-forming peroxides, such as for example diacyl peroxides, hydroperoxides, percarbonates and mixtures hereof. Suitable diacyl peroxides are for example diacetyl peroxide, dibenzoyl peroxide, di-p-chlorobenzoyl peroxide, phthaloyl peroxide, succinyl peroxide, dilauryl peroxide and acetylcyclohexane sulphonyl peroxide. Suitable hydroperoxides are for example methylethylketone peroxide, t-butylhydroperoxide, t-butylperbenzoate, cyclohexanone peroxide and cumene hydroperoxide. Suitable percarbonates are for example cyclohexane percarbonate and bis-(4-tert-butylcyclohexyl)-percarbonate.

The resin composition according to the invention may optionally contain an accelerator. Suitable accelerators are for example tertiary amines and/or metal salts, which are added to the resin composition in relatively small amounts, preferably in amounts by weight of between 0.01 and 2 wt.%. Suitable metal salts are for example zirconium carboxylates, manganese carboxylates and cobalt octoate or cobalt naphthenate. Suitable amines are for example aniline derivatives and N,N-bisalkylarylamines, such as for example N,N-dimethylaniline, N,N-diethylaniline, N,N-dimethylparatoluidine, N,N-bis(hydroxyalkyl)arylamine, N,N-bis(β-hydroxyethyl)aniline, N,N-bis(β-hydroxyethyl)toluidine, N,N-bis (γ-hydroxypropyl)aniline and N,N-bis(β-hydroxypropyl)toluidine. Accelerators that are also suitable are polymeric amines, as for example obtained in polycondensation of N,N-bis(β-hydroxyethyl)aniline with a dicarboxylic acid.

The resin composition according to the invention may optionally contain one or more inhibitors in an amount of between 0.005 and 0.2 wt.%, preferably between 0.01 and 0.1 wt.%, relative to the total weight of components (A) up to and including (E). Inhibitors that are suitable for use are for example hydroquinone, 2,6-dimethylhydroquinone, 2,5-di-tert-butylhydroquinone, tert-butylcatechol, benzoquinone, chloranil, naphthoquinone, phenothiazine, copper naphthenate and thiodiphenylamine.

The resin composition according to the invention is prepared by mixing at least components (A) up to and including (E) in a suitable mixing apparatus such as a kneader or rolls. The resulting mass can subsequently be processed into an end product, for example a headlight reflector, by means of compression moulding or, preferably, by means of injection-moulding in a heated mould and curing at a suitable temperature, usually between 100°C and 200°C.

The invention will now be further elucidated with reference to the following examples without incidentally being limited hereto.

### Examples I and II and Comparative Experiment A

### The components used

Synolite™ 1440-N-1: an unsaturated polyester resin containing 3.1 wt.% 2,3-epoxypropyl neodecanoate, relative to the sum of (A) and (B), which has been dissolved in 35 wt.% styrene as a reactive monomer, obtainable from DSM Resins, the Netherlands (as the sum of components (A), (B) and (F)). The acid number measured according to ISO 3682 is less than 2 mg of KOH/g.
Synolite™ 8199-M-1: an anti-shrink compound based on acrylate, dissolved in 65 wt.% styrene, obtainable from DSM Resins, the Netherlands (as component (C)).
Synolite™ 0423-N-2: an unsaturated polyester resin dissolved in 35 wt.% styrene as a reactive monomer, obtainable from DSM Resins, the Netherlands (as the sum of components (A) and (B)). The acid number measured according to ISO 3682 is 20 mg of KOH/g.
Cardura™ E: 2,3-epoxypropyl neodecanoate, a monofunctional epoxide obtainable from Shell, the Netherlands (as component (F))
Millicarb™: calcium carbonate powder, obtainable from Omya/Pluss-Staufer, Germany (as component (E))
Chopped Roving 5230: chopped glass fibres with lengths before compounding of between 4.5 and 13 mm, obtainable from Vetrotex at Chambery, France (as component (D))

### Example I

### Preparation of resin composition (compounding)

55.8 parts by weight of Synolite™ 1440-N-1 and 37.7 parts by weight of Synolite™ 8199-M-1 were mixed in a mixing tub together with 6.5 parts by weight of styrene monomer, 0.03 parts by weight of inhibitor (parabenzoquinone) and 1.5 parts by weight of a peroxide mixture. Next, 150 parts by weight of Millicarb™ were added to the same mixing tub with constant stirring. The mixture obtained was then pumped to a Z-blade mixer, to which another 150 parts by weight of Millicarb™ were subsequently added, and kneaded to form a homogeneous mass. Ultimately 65 parts by weight of chopped glass fibres were added to this mass and intimately mixed with the mass for 1-3 minutes.

### Production of headlight reflector

The mass obtained was subsequently injection-moulded using a Battenfeld™ injection-moulding machine fitted wit a double steel mould (two headlights at the same time), with a central sprue. The steel mould had been polished to a high gloss and chromium-plated. The mould was at a temperature of 170°C.
The headlight reflectors were easily removed from the mould without any release problems.

### Example II

### Preparation of resin composition (compounding)

55.8 parts by weight of Synolite™ 0423-N-2 and 37.7 parts by weight of Synolite™ 8199-M-1 were mixed in a mixing tub together with 6.5 parts by weight of styrene monomer, 0.03 parts by weight of inhibitor (parabenzoquinone) and 1.5 parts by weight of the peroxide mixture of Example I. Next, 3.1 wt.%, relative to the total amount of components (A) and (B), of Cardura E and 150 parts by weight of Millicarb™ were added to the same mixing tub with constant stirring. The mixture obtained was then pumped to a Z-blade mixer, to which another 150 parts by weight of Millicarb™ were subsequently added, and kneaded to form a homogeneous mass. Ultimately 65 parts by weight of chopped glass fibres were added to this mass and intimately mixed with the mass for 1-3 minutes.

In the same way as in Example I two headlight reflectors and a specimen plate for determining the amount of fogging were subsequently produced. The test results are shown in Table 1. The headlight reflectors were easily removed from the mould without any release problems.

### Comparative Experiment A

### Preparation of resin composition (compounding)

55.8 parts by weight of Synolite™ 0423-N-2 and 37.7 parts by weight of Synolite™ 8199-M-1 were mixed in a mixing tub together with 6.5 parts by weight of styrene monomer, 0.03 parts by weight of inhibitor (parabenzoquinone), 1.5 parts by weight of the peroxide mixture of Example I and 5 parts by weight of a mould release agent (calcium stearate). Next, 150 parts by weight of Millicarb™ were added to the same mixing tub with constant stirring. The mixture obtained was then pumped to a Z-blade mixer, to which another 150 parts by weight of Millicarb™ were subsequently added, and kneaded to form a homogeneous mass. Ultimately 65 parts by weight of chopped glass fibres were added to this mass and intimately mixed with the mass for 1-3 minutes.

In the same way as in Example I two headlight reflectors and a specimen plate for the determination of the amount of fogging were subsequently produced. The test results are shown in Table 1. The headlight reflectors were easily removed from the mould without any release problems.

### Test method for determining fogging

The following test method was used so as to be able to determine the amount of fogging.

The resin composition obtained as described above was used to produce a flat plate with a thickness of 3.5 mm by means of compression moulding. To this end a mass of the resin composition is introduced into a plate-shaped mould, which mould is subsequently closed under pressure by means of a press. The mould is at a temperature of 150°C. Curing takes place in the mould for 1.5 minutes.
Next, specimen plates (10 cm x 10 cm) are sawn from the plate obtained. A specimen plate is then clamped onto a heating plate with the aid of a clamping device. A metal cylinder with a diameter of 5 cm and a height of 10 cm, covered with a previously weighed watch glass, is placed on the plate. A temperature sensor has been installed on the specimen plate immediately next to the metal cylinder, which measures the surface temperature of the specimen plate and also controls the supply of heat from the heating plate. The heating is set so that the surface temperature remains between 160°C and 170°C during the test.
The watch glass is cooled by means of a constant stream of compressed air, so that any low-molecular substances evaporated from the specimen plate condense onto it. After a preset time of 4 hours the heating is switched off and the amount of fogging of the resin composition is determined by weighing the watch glass. The amount of fogging on the watch glass is also visually assessed, using the following ranking:

| Ranking | Characteristic |
|---|---|
| + + | a small amount of transparent deposit |
| + | A large amount of transparent deposit |
| - | a small amount of non-transparent deposit |
| - - | A large amount of non-transparent deposit |

### Test results

**Table 1:**

| Fogging test results | | | |
|---|---|---|---|
| Example | Condensate weight after 4 hours (mg) | Fogging ranking | Release from mould |
| Example I | 0.1 | + + | + |
| Example II | 0.2 | + + | + |
| Comp. Exp. A | 2.6 | - - | + |

The test results obtained show that the amount of fogging that occurs with the resin composition according to the invention is many times lower than with the resin composition according to the state of the art. The ease with which the moulded parts produced (headlight reflectors, specimen plates) can be removed from the mould is comparable with the resin composition according to the state of the art.

## Claims

1. Resin composition comprising:
(A) an unsaturated polyester;
(B) a monomer that is copolymerizable with the unsaturated polyester (A);
(C) optionally an anti-shrink compound;
(D) reinforcing fibres; and
(E) fillers,
characterized in that the unsaturated polyester (A) has an acid number, measured according to ISO 3682, of less than 13 mg of KOH/g.

2. Resin composition comprising:
(A) an unsaturated polyester;
(B) a monomer that is copolymerizable with the unsaturated polyester (A);
(C) optionally an anti-shrink compound;
(D) reinforcing fibres; and
(E) fillers, characterized in that the resin composition contains condensed radicals resulting from a reaction of a monofunctional compound (F) containing an epoxide group with the acid end groups of the unsaturated polyester (A).

3. Resin composition according to Claim 2, characterized in that compound (F) is a monofunctional epoxide of formula: 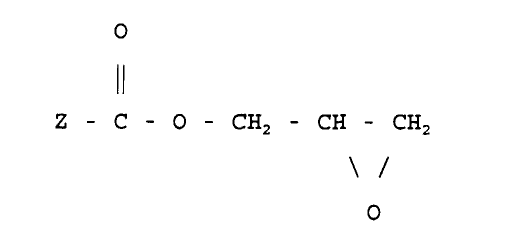 in which Z is an organic group chosen from the group comprising C₄ - C₂₀ branched alkyl.

4. Resin composition according to Claim 3, characterized in that Z is chosen from the group comprising C₈ - C₁₂ branched alkyl.

5. Resin composition according to any one of Claims 2-4, characterized in that the amount of compound (F) is between 0.5 and 10 wt.%, relative to the total weight of components (A) up to and including (E).

6. Resin composition according to any one of Claims 2-5, characterized in that the amount of compound (F) is between 2 and 5 wt.%, relative to the total weight of components (A) up to and including (E).

7. Resin composition according to any one of Claims 1-6, characterized in that the resin composition contains between 0 and 0.5 wt.% mould release agent, relative to the resin composition's total weight.

8. The use of a resin composition according to any one of Claims 1-7 in a headlight housing.

9. The use of a resin composition containing components (A), (B) and (F) in a headlight housing.

10. The use of compound (F) in a headlight housing.
